# EUROPEAN PATENT APPLICATION

(11) **EP 2 779 076 A1**
(43) Date of publication of application: **17.09.2014**
(21) Application number: 14159409.3
(22) Date of filing: 13.03.2014
(51) Int. Cl.: G06Q 30/02

(54) **Proposal server and system for proposing product to customer**

(30) Priority: 15.03.2013 JP 2013054375
(71) Applicant: Kyocera Document Solutions Inc., Chuo-ku Osaka 540-8585 (JP)
(72) Inventor: Ishizu, Ryuichi, Osaka, 540-8585 (JP); Yamagami, Hiromi, Osaka, 540-8585 (JP); Tsuji, Chika, Osaka, 540-8585 (JP)
(74) Representative: Trinks, Ole

(57) **Abstract**

A proposal server (30) includes a communication unit (33), a storage unit (34), and a control unit (35). The control unit (35) includes: an equipment use information receiving unit (35d) that receives equipment use information relating to equipment used by a customer; a user authorization unit (35b) that authorizes a user; a user product price management unit (35c) manages the price of a product for the user; a customer product price determination unit (35h) that determines, as the price of the product for the customer, the price of the product with respect to the user authorized; and a product proposal information generation unit (35e) that generates product proposal information (34e) for proposing a product suitable for the customer, on the basis of the equipment use information, and the price of the product determined.

## Description

### FIELD

The present disclosure relates to a proposal server and system that generates product proposal information for proposing a product to a customer.

### BACKGROUND

A typical proposal system for proposing a product to a customer receives equipment use information relating to the equipment used by the customer, and generates product proposal information on the basis of the equipment use information.

In a typical proposal system, because product proposal information is not generated on the basis of the price of a product to be proposed to a customer, it is necessary for the price of the product to be proposed to the customer to be managed by a user separately from the product proposal information.

### SUMMARY

A proposal server of an embodiment of the present disclosure includes a communication unit, a storage unit, and a control unit. The communication unit is configured to communicate with an external device. The storage unit configured to store a price of a product. The control unit configured to control the proposal server and includes an equipment use information receiving unit, a user authorization unit, a user product price management unit, a customer product price determination unit, and a product proposal information generation unit. The equipment use information receiving unit is configured to receive equipment use information relating to equipment used by a customer, through the communication unit. The user authorization unit is configured to authorize a user. The user product price management unit is configured to manage a price of a product for the user that is stored in the storage unit. The customer product price determination unit is configured to determine, as the price of the product for the customer, the price of the product managed by the user product price management unit with respect to the user authorized by the user authorization unit. The product proposal information generation unit is configured to generate product proposal information for proposing a product to the customer, on the basis of the equipment use information received by the equipment use information receiving unit, and the price of the product determined by the customer product price determination unit.

A method of an embodiment of the present disclosure includes: (i) communicating, via a communication unit (33), with an external device, (ii) storing a price of a product in a storage unit (34), (iii) controlling, via a control unit (35), a proposal server (30). The controlling includes the steps: (iv) receiving, via an equipment use information receiving unit, equipment use information relating to equipment used by a customer, through the communication unit; (v) authorizing, via a user authorization unit, a user; (vi) managing, via a user product price management unit, a price of a product for the user; (vii) determining, via a customer product price determination unit, as the price of the product for the customer, the price of the product managed by the user product price management unit with respect to the user authorized by the user authorization unit; and (viii) generating, via a product proposal information generation unit, product proposal information for proposing a product to the customer, on the basis of the equipment use information received by the equipment use information receiving unit, and the price of the product determined by the customer product price determination unit.

A non-transitory computer-readable recording medium of an embodiment of the present disclosure stores a proposal program executable by a computer of a proposal server. The proposal program includes first to third program codes. The first program code causes the computer to communicate with an external terminal. The second program code that causes the computer to store a price of a product in a storage unit. The third program code that causes the computer to control the proposal server. The third program code includes first to fifth sub program codes. The first sub program code causes the computer to receive, by the first program code equipment use information relating to equipment used by a customer. The second sub program code causes the computer to authorize a user. The third sub program code causes the computer, manages a price of a product for the user that is stored by the second program code. The fourth sub program code causes the computer to determine, as the price of the product for the customer, the price of the product managed by the third sub program code with respect to the user authorized by the second sub program code. The fifth sub program code causes the computer to generate product proposal information for proposing a product to the customer, on the basis of the equipment use information received by the first sub program code, and the price of the product determined by the fourth sub program code.

Additional features and advantages are described herein, and will be apparent from the following detailed description and the figures.

### BRIEF DESCRIPTION OF THE DRAWINGS

In the All drawings are intended to illustrate some aspects and examples of the present disclosure. The drawings described are only schematic and are nonlimiting, and are not necessarily drawn to scale.
Fig. 1 depicts the configuration of a proposal system according to an embodiment of the present disclosure;
Fig. 2 depicts the configuration of the user terminal of Fig. 1;
Fig. 3 depicts the configuration of the proposal server of Fig. 1;
Fig. 4 depicts an example of the price information of Fig. 3;
Fig. 5 depicts the configuration of an image forming system of a customer of a seller as the user of the user terminal of Fig. 2;
Fig. 6 depicts a procedure for the operation of the proposal server depicted in Fig. 3 when common product price information is set;
Fig. 7 depicts a procedure for the operation of the proposal server depicted in Fig. 3 when user product price information is set;
Fig. 8 depicts a procedure for the operation of the proposal server depicted in Fig. 3 when product proposal information is generated;
Fig. 9 depicts a procedure for the product selling price acquisition processing depicted in Fig. 8; and
Fig. 10 depicts an example of a selling price determination screen displayed on a display unit of the user terminal depicted in Fig. 2.

### DETAILED DESCRIPTION

Various embodiments are described below with reference to the figures. It should be understood, however, that numerous variations from the depicted arrangements and functions are possible while remaining within the scope and spirit of the claims. For instance, one or more elements may be added, removed, combined, distributed, substituted, re-positioned, re-ordered, and/or otherwise changed. Further, where this description refers to one or more functions being implemented on and/or by one or more devices, one or more machines, and/or one or more networks, it should be understood that one or more of such entities could carry out one or more of such functions by themselves or in cooperation, and may do so by application of any suitable combination of hardware, firmware, and/or software. For instance, one or more processors may execute one or more sets of programming instructions as at least part of carrying out one or more of the functions described herein.

Hereafter, an embodiment of the present disclosure is described using the drawings.

First, the configuration of a proposal system 10 according to the embodiment is described.

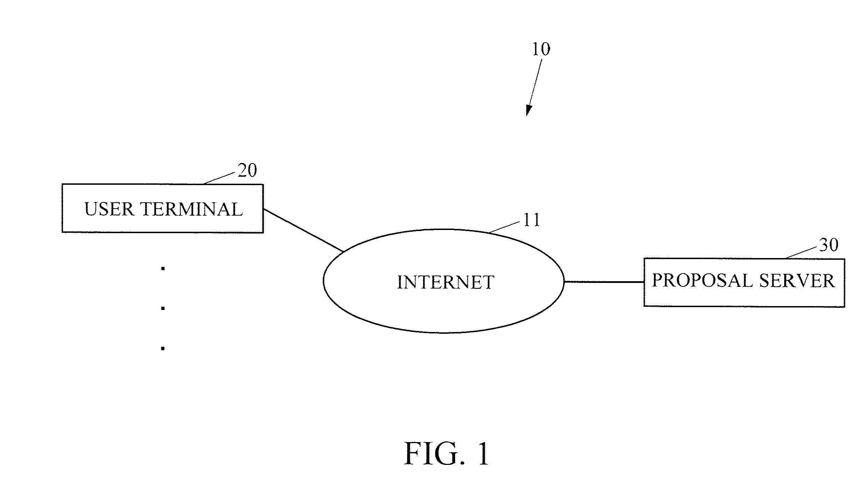

Fig. 1 depicts the configuration of the proposal system 10 according to the embodiment.

As depicted in Fig. 1, the proposal system 10 includes a plurality of user terminals including a user terminal 20 that is used by a seller of products such as image forming devices, and a proposal server 30 that generates product proposal information for proposing a product to a customer of the seller as the user of the user terminal.

The plurality of user terminals within the proposal system 10, and the proposal server 30 are communicably connected to each other via the Internet 11.

The configuration of each of the plurality of user terminals within the proposal system 10 is the same as the configuration of the user terminal 20. Accordingly, a description is given hereafter with respect to the user terminal 20 as representing the plurality of user terminals within the proposal system 10.

Moreover, the proposal server 30 is managed by the manufacturer of the products. Furthermore, the users of the user terminals are the sellers of the products. The sellers may also be persons that sell not only the products of the manufacturer managing the proposal server 30 but also the products of other manufacturers.

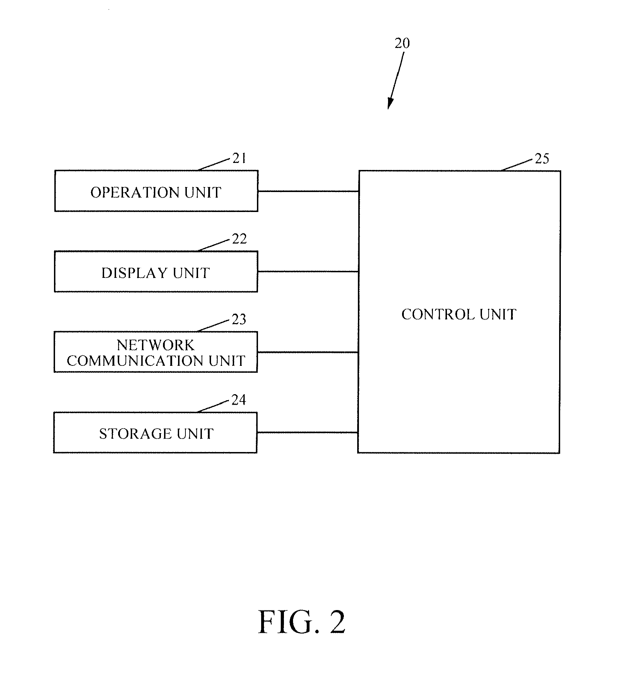

Fig. 2 depicts the configuration of the user terminal 20.

As depicted in Fig. 2, the user terminal 20 includes: an operation unit 21 as an input device such as a mouse or a keyboard with which a variety of operations are input; a display unit 22 such as a liquid crystal display (LCD) that displays a variety of information; a network communication unit 23 that communicates with an external device via the Internet 11 (see Fig. 1); a storage unit 24 such as a hard disk drive (HDD) on which a program and various data are stored; and a control unit 25 that controls the entirety of the user terminal 20. The user terminal 20 is constituted by a computer such as a personal computer (PC) or a tablet terminal.

The control unit 25 includes: a central processing unit (CPU); a read-only memory (ROM) that stores a program and various data; and a random-access memory (RAM) that is used as a work area for the CPU. The CPU executes the program stored in the ROM or the storage unit 24.

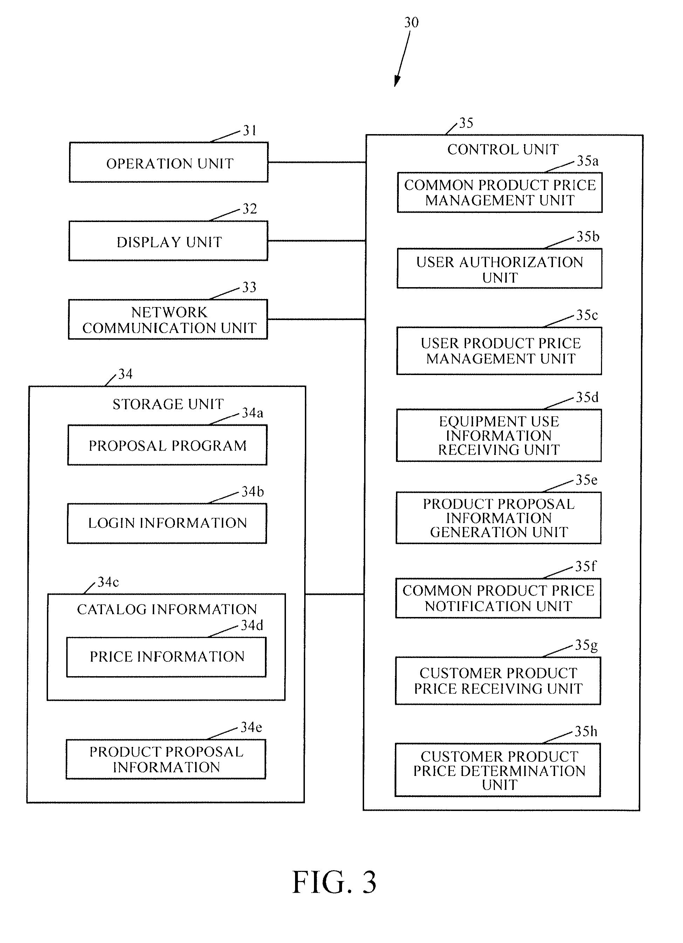

Fig. 3 depicts the configuration of the proposal server 30.

As depicted in Fig. 3, the proposal server 30 includes: an operation unit 31 as an input device such as a mouse or a keyboard with which a variety of operations are input; a display unit 32 such as an LCD that displays a variety of information; a network communication unit 33 that communicates with an external device via the Internet; a storage unit 34 such as an HDD on which a program and various data are stored; and a control unit 35 that controls the entirety of the proposal server 30. The proposal server 30 is constituted by a computer such as a PC.

The storage unit 34 stores a proposal program 34a for supporting the sales of the seller as the user of the user terminal. The proposal program 34a may be installed in the proposal server 30 at the manufacturing stage of the proposal server 30, may be installed as an addition to the proposal server 30 from a storage medium such as a compact disc (CD) or a digital versatile disc (DVD), or may be installed as an addition to the proposal server 30 from the Internet 11.

Furthermore, the storage unit 34 is able to store login information 34b as a combination of a user ID and a password for the seller to log in to the proposal server 30.

Furthermore, the storage unit 34 is able to store catalog information 34c that includes information relating to a variety of products. The catalog information 34c includes price information 34d relating to the prices of products. Furthermore, the catalog information 34c also includes information such as the functions of a product, the types of expendable supplies for a product, the types of optional components for a product, the selling period for a product, and the selling area for a product. Moreover, the products included in the catalog information 34c include not only the products of the manufacturer managing the proposal server 30 but also the products of other manufacturers. Furthermore, the products referred to here include not only image forming devices but also a variety of products relating to image forming devices, such as optional components and expendable supplies for image forming devices.

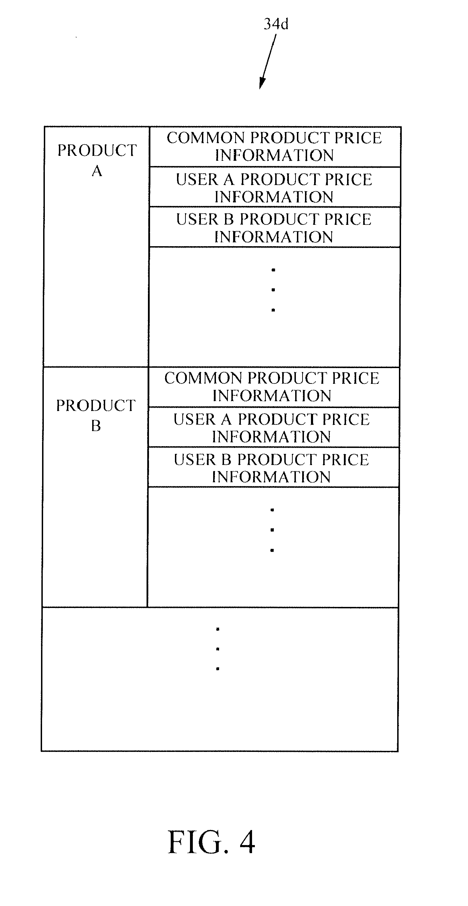

Fig. 4 depicts an example of the price information 34d.

As depicted in Fig. 4, the price information 34d includes information relating to each product, such as product A and product B.

Furthermore, the price information 34d includes, among information relating to prices for products, common product price information relating to a common price of a product for a plurality of sellers, and user product price information relating to the price of a product for a seller as the user of a user terminal, such as user A product price information and user B product price information. Moreover, even for the same product, the prices that are set for each seller may be different for numerous reasons such as differences in wholesale prices and differences in selling areas. Accordingly, the price information 34d includes user product price information for each seller.

The common product price information includes fixed prices for products set by the manufacturer, and market prices for products.

The user product price information includes: prices for products set by the seller; service prices for services performed by a product such as a click price such as a fee when one page of monochrome printing is performed by a product, and a fee when one page of color printing is performed by a product; and interest rates such as a rental interest rate when a product is acquired by renting, and a loan interest rate when a product is acquired by means of a loan.

As depicted in Fig. 3, the storage unit 34 is able to store product proposal information 34e for proposing a product to a customer of a seller.

The control unit 35 includes a CPU, a ROM that stores a program and various data, and a RAM that is used as a work area for the CPU. The CPU executes the program stored in the ROM or the storage unit 34.

By executing the proposal program 34a stored in the storage unit 34, the control unit 35 functions as a common product price management unit 35a that manages a common price of a product for a plurality of sellers, a user authorization unit 35b that authorizes a seller, a user product price management unit 35c that manages a price of a product for a seller, an equipment use information receiving unit 35d that receives equipment use information of an image forming device as equipment used by a customer, a product proposal information generation unit 35e that generates product proposal information 34e for proposing a product to a customer, a common product price notification unit 35f that notifies the price of a product managed by the common product price management unit 35a, a customer product price receiving unit 35g that receives the price of a product for a customer, and a customer product price determination unit 35h that determines the price of a product for a customer.

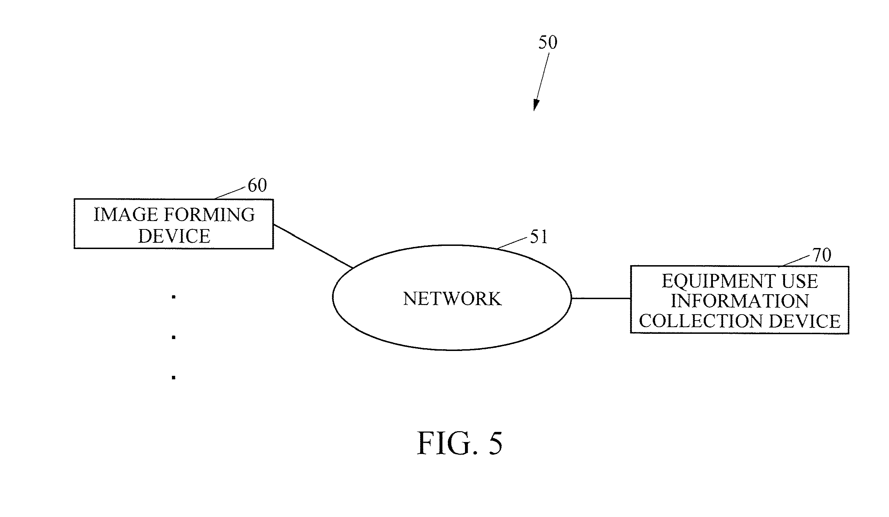

Fig. 5 depicts the configuration of an image forming system 50 of a customer of a seller as the user of the user terminal 20.
As depicted in Fig. 5, the image forming system 50 includes a plurality of image forming devices including an image forming device 60, and an equipment use information collection device 70. The equipment use information collection device 70 is a computer that automatically collects equipment use information from the plurality of image forming devices within the image forming system 50 and transmits the equipment use information, and may be included in the proposal system of the embodiment. The image forming system 50, as an image forming device, includes a multifunction peripheral (MFP), a dedicated printer, a dedicated copier, and a dedicated fax machine and so forth.

The plurality of image forming devices within the image forming system 50, and the equipment use information collection device 70 are communicably connected to each other via a network 51 such as a local area network (LAN) or the Internet.

The equipment use information collected by the equipment use information collection device 70 includes, for example, various information of the image forming devices, such as information of various counters such as the number of sheets printed by the image forming devices, and the Internet Protocol (IP) addresses of the image forming devices.

Next, the operation of the proposal system 10 is described.

First, the operation of the proposal system 10 when common product price information is set is described.

The manufacturer managing the proposal server 30 is able to instruct a login with administrator rights to the proposal server 30 by inputting the ID and password of the manufacturer by way of the operation unit 31 of the proposal server 30 for example. If the combination of the input ID and password of the manufacturer is registered in the login information 34b as the combination of a person having administrator rights, the control unit 35 of the proposal server 30 permits the login with administrator rights.

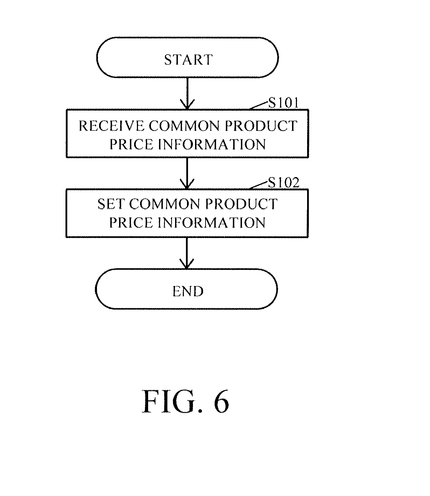

Fig. 6 depicts a flowchart for the operation of the proposal server 30 when common product price information is set.

The control unit 35 of the proposal server 30 carries out the operation depicted in Fig. 6 if the setting of common product price information is instructed by way of the operation unit 31 for example from a person logged in with administrator rights.

As depicted in Fig. 6, the common product price management unit 35a of the control unit 35 receives the common product price information that has been input (S101). The common product price management unit 35a sets the received common product price information by writing the common product price information in the price information 34d in the storage unit 34 (S102). Then the control unit 35 terminates the operation depicted in Fig. 6.

Next, the operation of the proposal system 10 when user product price information is set is described.

The seller is able to instruct the user terminal 20 to log in to the proposal server 30 by inputting the user ID and password of the seller by way of the operation unit 21 of the user terminal 20 for example. The control unit 25 of the user terminal 20 receives the instruction from the seller, and requests a login to the proposal server 30 by way of the network communication unit 23.

If the combination of the user ID and password of the seller that has been input by way of the network communication unit 33 is registered in the login information 34b, the user authorization unit 35b of the control unit 35 of the proposal server 30 determines that authorization has been successful and permits the login of the seller.

The seller is able to instruct the user terminal 20 to set user product price information in the proposal server 30 by way of the operation unit 21 of the user terminal 20 for example. The control unit 25 of the user terminal 20 receives the instruction from the seller, and requests the setting of the user product price information in the proposal server 30 by way of the network communication unit 23.

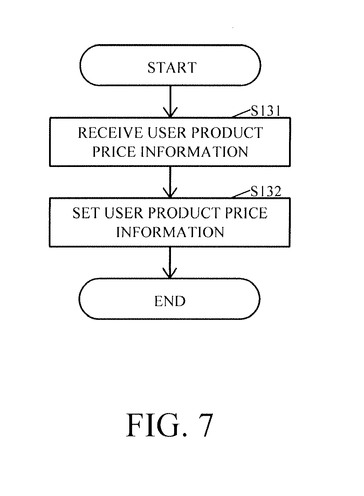

Fig. 7 depicts a procedure for the operation of the proposal server 30 when user product price information is set.

The control unit 35 of the proposal server 30 carries out the operation depicted in Fig. 7 if the setting of user product price information is instructed by way of the network communication unit 33 from a seller that is logged in.

As depicted in Fig. 7, the user product price management unit 35c of the control unit 35 receives the user product price information that has been input (S131). the user product price management unit 35c sets the received user product price information by writing the user product price information in the price information 34d in the storage unit 34 (S132). Then the control unit 35 terminates the operation depicted in Fig. 7.

Moreover, the user product price management unit 35c writes only the user product price information of the seller that instructed the setting of the user product price information, from among the plurality of user product price information of the price information 34d.

Next, the operation of the proposal system 10 when product proposal information is displayed on the user terminal 20 is described.

The seller as the user of the user terminal 20 acquires equipment use information that is output by the equipment use information collection device 70 of the image forming system 50. The equipment use information collection device 70 is able to export collected equipment use information as a comma-separated values (CSV) file in accordance with an instruction from a seller for example. The seller may directly acquire equipment use information that has been exported as a CSV file from an image forming device within the image forming system 50, without going through the equipment use information collection device 70.

Moreover, the equipment use information acquired by the seller from the image forming system 50 is information that indicates the printing environment of a customer.

The seller is able to instruct the user terminal 20 to log in to the proposal server 30 by inputting the user ID and password of the seller by way of the operation unit 21 of the user terminal 20 for example. The control unit 25 of the user terminal 20 receives the instruction from the seller, and requests a login to the proposal server 30 by way of the network communication unit 23.

If the combination of the user ID and password of the seller that has been input by way of the network communication unit 33 is registered in the login information 34b, the user authorization unit 35b of the control unit 35 of the proposal server 30 determines that authorization has been successful and permits the login of the seller.

After logging in to the proposal server 30, the seller instructs, by way of the operation unit 21, the user terminal 20 to import, to the proposal server 30, the equipment use information acquired as a CSV file from the image forming system 50. As result of this, the seller is able to instruct the user terminal 20 to generate product proposal information by means of the proposal server 30. The user terminal 20 receives the instruction from the seller, and transmits the equipment use information to the proposal server 30 by way of the network communication unit 23.

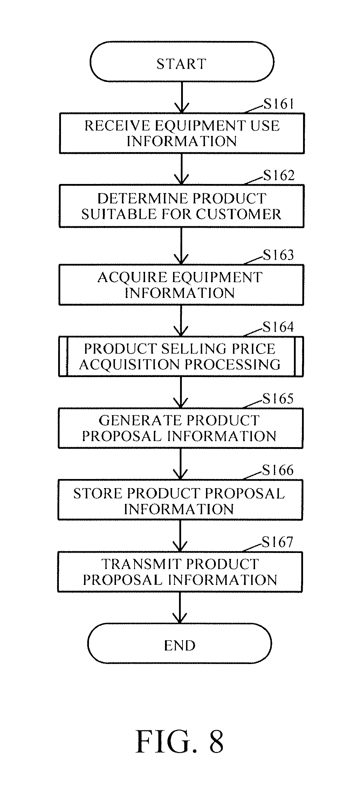

Fig. 8 depicts a procedure for the operation of the proposal server 30 when product proposal information is generated.

The proposal server 30 carries out the procedure depicted in Fig. 8 if equipment use information is transmitted from the user terminal 20.

As depicted in Fig. 8, the equipment use information receiving unit 35d of the control unit 35 of the proposal server 30 receives, by way of the network communication unit 33, the equipment use information that has been transmitted from the user terminal 20 (S161).

Next, on the basis of the equipment use information received in S161 and the catalog information 34c in the storage unit 34, the product proposal information generation unit 35e of the control unit 35 determines a product suitable for a customer, in other words, a product to be proposed to a customer (S162). For example, if the equipment use information indicates that a customer using an MFP capable of executing color printing on A3 size paper is actually executing only monochrome printing on A4 size paper, the product proposal information generation unit 35e determines, as a product suitable for the customer, a dedicated printer that is not capable of executing printing on A3 size paper or color printing, but is capable of executing monochrome printing on A4 size paper.

Next, the product proposal information generation unit 35e acquires, from the catalog information 34c in the storage unit 34, equipment information such as the functions, the types of expendable supplies, the types of optional components, the selling period, and the selling area of the product determined in S162 (S163).

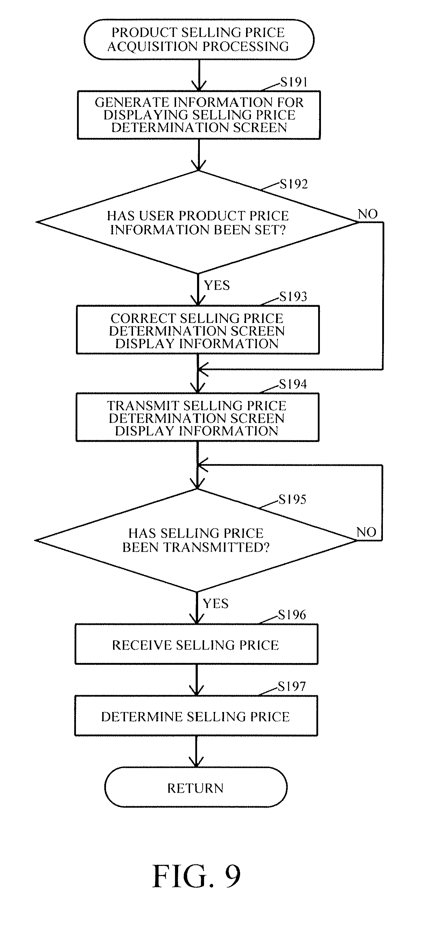

Next, the control unit 35 executes the product selling price acquisition processing depicted in Fig. 9 for acquiring the selling price of the product determined in S162, in other words, the price of the product for the customer (S164).

Fig. 9 depicts a procedure for the product selling price acquisition processing depicted in Fig. 8.

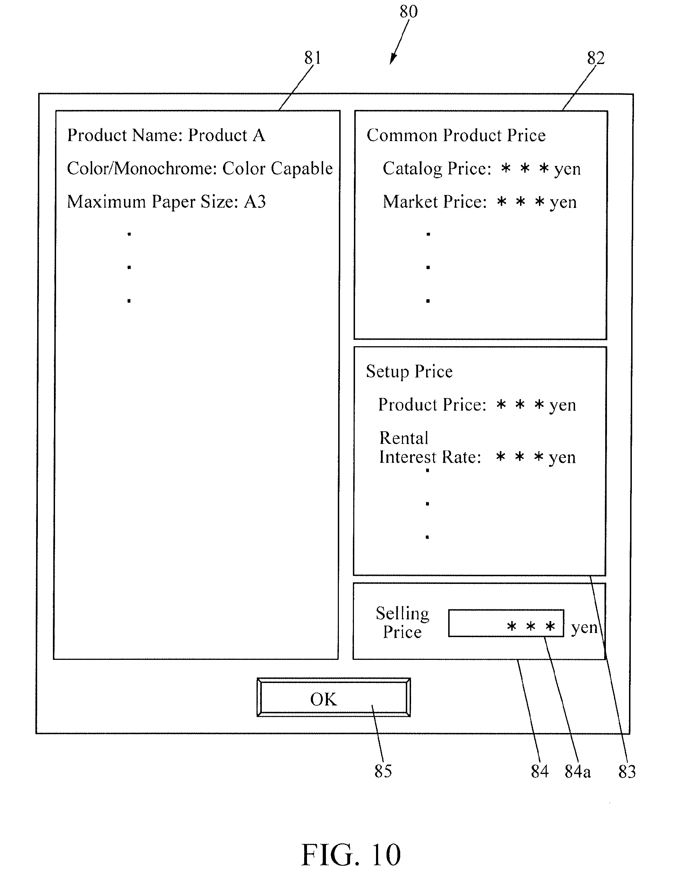

As depicted in Fig. 9, the control unit 35 generates information for displaying a selling price determination screen 80 (hereafter referred to as "selling price determination screen display information") such as that depicted in Fig. 10 for determining the selling price of the product determined in S162 (S191).

Fig. 10 depicts an example of the selling price determination screen 80 displayed on the display unit 22.

The selling price determination screen 80 depicted in Fig. 10 includes an equipment information display region 81 that displays equipment information of a product acquired in S163, a common product price display region 82 that displays the common product price information set in the price information 34d with respect to the product determined in S162, a user product price display region 83 that displays the user product price information set in the price information 34d with respect to be product determined in S162, a selling price display region 84 that displays the selling price for the product determined in S162, and a button 85 for determining the selling price displayed in the selling price display region 84.

The selling price display region 84 includes a graphical user interface (GUI) for the selling price to be input, such as a text box 84a. Moreover, the selling price displayed in the selling price display region 84 includes, for example, the price of the product in the case where the customer purchases a product in a single purchase operation, the service price in the case of a contract with which a service price is generated, a price obtained by multiplying the price of a product by a rental interest rate in the case where the customer acquires a product by renting, and a price obtained by multiplying the price of the product by a loan interest rate in the case where the customer acquires a product by means of a loan.

As depicted in Fig. 9, after the processing of S191, the user product price management unit 35c of the control unit 35 determines whether or not user product price information has been set in the price information 34d with respect to the product determined in S162 (S192). Moreover, the user product price management unit 35c reads only the user product price information of the seller that instructed the generation of the product proposal information, from among the plurality of user product price information of the price information 34d.

If it is determined in S192 that the user product price information has been set, the control unit 35 corrects the selling price determination screen display information in such a way that the price included in the user product price information is included in the selling price display region 84 of the selling price determination screen 80 (S193).

If it is determined in S192 that the user product price information has not been set, or when the processing of S193 terminates, the common product price notification unit 35f of the control unit 35 transmits the selling price determination screen display information generated in S191 (if corrected in S193, the selling price determination screen display information corrected in S193) to the user terminal 20 by way of the network communication unit 33 (S194). When the selling price determination screen display information that has been transmitted from the proposal server 30 is received by way of the network communication unit 23, the control unit 25 of the user terminal 20 displays the selling price determination screen 80 on the display unit 22 on the basis of the selling price determination screen display information. Moreover, as described above, the selling price determination screen 80 includes a common product price that is managed by the common product price management unit 35a with respect to the product determined in S162. In other words, the common product price notification unit 35f notifies, by means of the selling price determination screen 80, the common product price managed by the common product price management unit 35a with respect to the product determined in S162.

The control unit 25 of the user terminal 20 inputs a price to the selling price display region 84 of the selling price determination screen 80 in accordance with an operation performed by way of the operation unit 21. Furthermore, if it is determined that the button 85 has been pressed in accordance with an operation performed by way of the operation unit 21, the control unit 25 transmits the price included in the selling price display region 84, in other words, the selling price to the proposal server 30 by way of the network communication unit 23.

After the processing of S194, the customer product price receiving unit 35g of the control unit 35 of the proposal server 30 determines whether or not a selling price has been transmitted from the user terminal 20, until it is determined that a selling price has been transmitted from the user terminal 20 (S195).

If it is determined in S195 that a selling price has been transmitted from the user terminal 20, the customer product price receiving unit 35g receives the selling price that has been transmitted from the user terminal 20 (S196).

Next, the customer product price determination unit 35h of the control unit 35 determines the selling price received in S196, as a selling price for creating the product proposal information 34e (S197). Due to this, the product proposal information generation unit 35e acquires the selling price determined in S197, as the selling price for the product determined in S162.

After the processing of S197 has terminated, the control unit 35 terminates the operation depicted in Fig. 9.

As depicted in Fig. 8, after the product selling price acquisition processing of S164 has terminated, the product proposal information generation unit 35e generates product proposal information on the basis of the equipment information of the product acquired in S163, and the selling price of the product acquired in S164 (S165). In other words, the product proposal information generation unit 35e generates product proposal information for proposing a product to the customer.

Next, the control unit 35 stores the product proposal information generated in S165, in the storage unit 34 as product proposal information 34e (S166).

Next, the control unit 35 transmits the product proposal information generated in S165 to the user terminal 20 by way of the network communication unit 33 (S167). Then the control unit 35 terminates the operation depicted in Fig. 8.

When the product proposal information is transmitted from the proposal server 30, the user terminal 20 receives the product proposal information by way of the network communication unit 23, and displays the product proposal information on the display unit 22. Accordingly, the seller as the user of the user terminal 20 is able to propose a product that is suitable for the customer, by presenting the customer with product proposal information displayed on the display unit 22. On the basis of the product proposal information, the customer is able to, for example, reduce the maintenance cost for an image forming device by replacing the equipment currently being used with the proposed product.

As described above, the proposal system 10 is able to generate product proposal information (S165) on the basis of equipment use information relating to the equipment used by a customer (S161), and a price that is a price of a product being managed with respect to a seller (YES in S192, and S193) and is determined as a price for the customer of the product (S197). Thus, when proposing a product to a customer, the proposal system 10 is also able to propose a price for the product for the customer. Accordingly, when proposing a product to a customer, the seller is also able to easily propose a price for the product for the customer.

The proposal system 10 is able to receive the price of the product for the customer by means of the selling price display region 84 of the selling price determination screen 80 (S196) after the common price of the product for a plurality of sellers has been notified by means of the common product price display region 82 of the selling price determination screen 80 (S194). Thus, the proposal system 10 is able to appropriately designate, to a seller, the price of the product for the customer, by referring to the common price of the product for the plurality of sellers. Accordingly, when proposing a product to a customer, the proposal system 10 is able to also propose an appropriate price for the product for the customer. For example, the seller is able to propose separate selling prices for each customer with respect to the same product.

The proposal system 10 is able to display the common product price information in the common product price display region 82 of the selling price determination screen 80. Thus, if the user product price information is displayed in the user product price display region 83 of the selling price determination screen 80, the proposal system 10 is able to let the seller utilize both common product price information and the user product price information as reference information for determining the selling price of a product. Furthermore, the proposal system 10 is able to display the common product price information in the common product price display region 82 of the selling price determination screen 80. Thus, if the user product price information is not displayed in the user product price display region 83 of the selling price determination screen 80 for a reason such as the user product price information has not yet been set, the proposal system 10 is able to let the seller utilize the common product price information as reference information for determining the selling price of a product.

The manufacturer managing the proposal server 30 is able to promote the sales by a seller of the products of the manufacturer by implementing settings in such a way that the products of the manufacturer are actively proposed by the proposal server 30. Accordingly, the use of the highly convenient proposal system 10 by the seller of a product is also advantageous for the manufacturer managing the proposal server 30.

The equipment used and the product of the present disclosure are image forming devices in the embodiment; however, these may be equipment other than image forming devices.

It should be understood that various changes and modifications to the presently embodiments described herein will be apparent to those skilled in the art. Such changes and modifications can be made without departing from the spirit and scope of the present subject matter and without diminishing its intended advantages. It is therefore intended that such changes and modifications be covered by the appended claims.

## Claims

1. A proposal server (30) for proposing products to customer, the proposal server (30) comprising:
- a communication unit (33) configured to communicate with an external device;
- a storage unit (34) configured to store a price of a product; and
- a control unit (35) configured to control the proposal server (30),
wherein the control unit (35) includes:
- an equipment use information receiving unit (35d) configured to receive equipment use information relating to equipment used by a customer, through the communication unit (33);
- a user authorization unit (35b) configured to authorize a user;
- a user product price management unit (35c) configured to manage the price of a product for the user that is stored in the storage unit (34);
- a customer product price determination unit (35h) configured to determine, as the price of the product for the customer, the price of the product managed by the user product price management unit (35c) with respect to the user authorized by the user authorization unit (35b); and
- a product proposal information generation unit (35e) configured to generate product proposal information (34e) for proposing a product suitable for the customer, on the basis of the equipment use information received by the equipment use information receiving unit (35d), and the price of the product determined by the customer product price determination unit (35h).

2. The proposal server (30) according to claim 1, wherein the control unit (35) further includes:
- a common product price management unit (35a) configured to manage a common price of the product for a plurality of users that is stored in the storage unit (34);
- a common product price notification unit (35f) configured to notify the price of the product managed by the common product price management unit (35a); and
- a customer product price receiving unit (35g) configured to receive the price of the product for the customer after notification by the common product price notification unit (35f),
wherein the customer product price determination unit (35h) is configured to, when the price of the product has been received by the customer product price receiving unit (35g), determine the price of the product received by the customer product price receiving unit (35g), as the price of the product for the customer, instead of the price of the product managed by the user product price management unit (35c) with respect to the user authorized by the user authorization unit (35b).

3. A system (10) for proposing products to customer, the system comprising:
- a proposal server (30) according to claim 1;
- an equipment use information collection device (70) configured to collect the equipment use information from the equipment used and output the equipment use information; and
- a user terminal (20) configured to acquire the equipment use information output from the equipment use information collection device (70) and transmit the equipment use information.

4. The proposal system (10) according to claim 3, wherein the control unit (35) further includes:
- a common product price management unit (35a) configured to manage a common price of the product for a plurality of users that is stored in the storage unit (34);
- a common product price notification unit (35f) configured to notify the price of the product managed by the common product price management unit (35a); and
- a customer product price receiving unit (35g) configured to receive the price of the product for the customer after notification by the common product price notification unit (35f),
wherein the customer product price determination unit (35h) is configured to, when the price of the product has been received by the customer product price receiving unit (35g), determine the price of the product received by the customer product price receiving unit (35g), as the price of the product for the customer, instead of the price of the product managed by the user product price management unit (35c) with respect to the user authorized by the user authorization unit (35b).

5. A method for proposing products to customer, the method comprises:
- communicating, via a communication unit (33), with an external device;
- storing a price of a product in a storage unit (34); and
- controlling, via a control unit (35), a proposal server (30),
wherein the controlling step includes the following steps:
- receiving, via an equipment use information receiving unit (35d), equipment use information relating to equipment used by a customer, through the communication unit (33);
- authorizing, via a user authorization unit (35b) of the proposal server (30), a user;
- managing, via a user product price management unit (35c), a price of the product for the user that is stored in the storage unit (34);
- determining, via a customer product price determination unit (35h), as the price of the product for the customer, the price of the product managed by the user product price management unit (35c) with respect to the user authorized by the user authorization unit (35b); and
- generating, via a product proposal information generation unit (35e), product proposal information (34e) for proposing a product suitable for the customer, on the basis of the equipment use information received by the equipment use information receiving unit (35d), and the price of the product determined by the customer product price determination unit (35h).

6. The method according to claim 5, further comprising the following steps prior to the communicating step:
- collecting, via the equipment use information collection device (70), the equipment use information from the equipment used and outputting the equipment use information; and
- acquiring, via the user terminal (20), the equipment use information output from the equipment use information collection device (70) and transmitting the equipment use information.

7. The proposal method according to claim 5 or 6, wherein the controlling step further includes the following steps:
- managing, via a common product price management unit (35a) of the proposal server (30), a common price of the product for a plurality of users that is stored in the storage unit (34);
- notifying, via a common product price notification unit (35f) of the proposal server (30), the price of the product managed by the common product price management unit (35a); and
- receiving, via a customer product price receiving unit (35g) of the proposal server (30), the price of the product for the customer after notification by the common product price notification unit (35f), and
wherein the customer product price determination unit (35h), when the price of the product has been received by the customer product price receiving unit (35g), determines the price of the product received by the customer product price receiving unit (35g), as the price of the product for the customer, instead of the price of the product managed by the user product price management unit (35c) with respect to the user authorized by the user authorization unit (35b).

8. A non-transitory computer-readable recording medium that stores a proposal program executable by a computer of a proposal server (30), the proposal program comprises:
- a first program code that causes the computer to communicate with an external terminal;
- a second program code that causes the computer to store a price of a product in a storage unit (34); and
- a third program code that causes the computer to control the proposal server (30), the third program code includes:
- a first sub program code that causes the computer to receive, by the first program code, equipment use information relating to equipment used by a customer;
- a second sub program code that causes the computer to authorize a user;
- a third sub program code that causes the computer to manage a price of a product for the user that is stored by the second program code;
- a fourth sub program code that causes the computer to determine, as the price of the product for the customer, the price of the product managed by the third sub program code with respect to the user authorized by the second sub program code; and
- a fifth sub program code that causes the computer to generate product proposal information (34e) for proposing a product suitable for the customer, on the basis of the equipment use information received by the first sub program code, and the price of the product determined by the fourth sub program code.

9. The non-transitory computer-readable recording medium according to claim 8, wherein the third program code further includes:
- a sixth sub program code that causes the computer to manage a common price of the product for a plurality of users that is stored by the second program code;
- a seventh sub program code that causes the computer to notify the price of the product managed by the sixth sub program code; and
- an eighth sub program code that causes the computer to receive the price of the product for the customer after notification by the seventh sub program code, and
wherein the first sub program code causes the computer, when the price of the product has been received by the eighth sub program code, to determine the price of the product received by the eighth sub program code, as the price of the product for the customer, instead of the price of the product managed by the third sub program code with respect to the user authorized by the second sub program code.
